# EUROPEAN PATENT APPLICATION

(11) **EP 1 033 643 A1**
(43) Date of publication of application: **06.09.2000**
(21) Application number: 99944796.4
(22) Date of filing: 22.09.1999
(51) Int. Cl.: G06F 3/00

(54) **INFORMATION PROCESSOR, INFORMATION PROCESSING METHOD AND MEDIUM**

(30) Priority: 25.09.1998 JP 27195298
(71) Applicant: FUJITSU LIMITED, Kawasaki-shi, Kanagawa 211-8588 (JP)
(72) Inventor: KUMAZAWA, Takeshi, Fujitsu Limited, Kawasaki-shi, Kanagawa 211-8588 (JP); FUKUI, Nobuhito, Fujitsu Personal, Inagi-shi, Tokyo 206-0801 (JP)
(74) Representative: Hitching, Peter Matthew
(86) International application number: JP9905202
(87) International publication number: WO0019303

(57) **Abstract**

An on-disk-top information display system enabling a user to visually easily grasp a content of information and capable of attaining a method of conceptually easily acquiring the information, is disclosed. A representative character string is converted from source data including character strings into image data defined as an object, and the image data is displayed on a disk top. When the image data is designated, the source data linked to the image data concerned can be accessed. The image data as the object representing the source data is displayed on a display screen, whereby a content of the source data can be grasped at a glance. This facilitates a user's judgement as to whether details of the source data should be browsed or not.

## Description

### Technical Field

The present invention relates to a technology effective in an application to a method of displaying an object on a display device of a personal computer, etc..

### Background Arts

An interface friendly to users on a display of a computer, etc. has been developed, and browsing and execution of a file and a folder are facilitated by clicking, e.g., an icon and a button by sue of a mouse.

On the other hand, a search for a database on the Internet becomes increasingly user-oriented, and, as represented by a search engine such as YAHOO and so on, a link is set to a header sentence of a result of search, whereby a homepage of text can be easily browsed.

It is, however, a situation that a user interface for displaying the information such as a file and a list of the result of search for the database in such a format the user is able to visually grasp contents thereof, is not yet actualized.

That is to say, it can be visually comprehended that the icon symbolizing the file within the computer indicates what sort of document or image data, however, a data quantity and date/time of creation of the file can not be recognized unless displayed in details.

Further, the search result through the search engine on the Internet, etc. is displayed in a data format known as HTML (Hyper Text Markup Language). This search result is, however, simply statically displayed through a browsing program called a browser on the screen, which is unsuited to such an application that the user skims through the search results on the disk top and only a necessary item of information is displayed thereon.

Further, as in case of PointCast Network which is a product of PointCast Corp., there is a system in which pieces of information such as headlines and stock prices runs in the form of [Ticker] as a telop runs and are thus displayed on the screen. The information displayed on this Ticker is linked to detailed information (which will hereinafter be referred to as link information).

According to this technology, when the link formation requiring the detailed information is displayed on the Ticker, a user selectively indicates (clicks double) the concerned link information on the ticker by use of a mouse, and thus accesses a Web site where the detailed information linked to the link information exists, whereby the detailed information can be displayed.

According to the prior art constructed such that the detailed information linked to the link information is thus displayed in response to the selective indication of the link information displayed on the ticker, the user is able to browse a desired item of detailed information by a simple operation such as selectively indicating the information on the ticker updated in sequence.

Even when the necessary information is displayed on the ticker, however, the user is in the process of performing other operations and may not therefore display the detailed information without selectively indicating the link information. In such a case, if failing to catch a timing of that selective indication, the user has to wait for a next information display timing when a desired item of link information is displayed on the ticker.

Moreover, the ticker is updated so that the latest information is displayed and hence, if failing to catch the selective indication timing, it follows that the link information to the desired item of information is not displayed on the ticker. In this case, it is required that the user specifies a URL (Uniform Resource Locator) (Web site) to which the desired item of detailed information is related by executing other searching process and browses the information.

According to the prior art described above, it is difficult to browse the detailed information immediately when the user needs, and an operational load upon the user might increase.

It is an object of the present invention, which was devised under such circumstances, to provide an on-disk-top information display system enabling the user to visually easily grasp contents of information accumulated in a computer of the user or in a data server via a network, and capable of attaining a method of conceptually easily acquiring the information.

### Disclosure of Invention

According to a first aspect of the present invention/, an object display device comprises means for converting a representative character string of source data containing character strings into image data defined as an object, means for storing the source data and the image in a manner of relating these pieces of data to each other, and means for displaying the image data on display means.

The source data is, e.g., a document file and newspaper article data obtained as a result of searching a database. A character string serving as a main subject of the file or the data is converted from code data into a bitmap data format.

The thus created image data is displayed on a display device such as a display unit, etc..

Thus, the image data defined an object representing the source data is displayed on the display means, whereby a content of the source data can be grasped at a glance. This highly facilitates a user's judgement as to whether details of the source data should be browsed or not.

According to a second aspect of the present invention, the object display device according to the first aspect of the invention, may further comprise means for displaying the source data linked to when the image data displayed is designated.

With this construction, the source data, of which the content can be easily grasped according to the first aspect of the invention, the image data is designated by coordinate indicating means such as a mouse, etc., thereby facilitating the browse.

According to a third aspect of the present invention, the object display device according to the first aspect of the invention, the image data is structured such that the character string is converted into a bitmap and thus laid out on an background image.

The image data is thus structured, thereby facilitating a user's visual comprehension about an object symbolizing the source data.

According to a fourth aspect of the present invention, the object display device according to the third aspect of the invention, the image data has a window, provided along a periphery of the background image, for showing an attribute of the source data to which the image data is linked.

This attribute of the source data is, for instance, a capacity of the source data, and the data may be displayed in such a way that a size of a window frame becomes different corresponding to this capacity (according to a fifth aspect of the present invention). In this case, an efficient display may be carried out by preparing beforehand template images with frame sizes being different (according to a sixth aspect of the present invention).

Further, the attribute of the source may be acquisition date and time of the source data, and the data may be displayed in a window of which a frame configuration becomes different corresponding to the number of hours or days since the time when the source data was acquired (according to a seventh aspect of the present invention). In this case also, there may be prepared template corresponding to the number of hours or days elapsed (according to a eighth aspect of the present invention).

According to a ninth aspect of the present invention, the object display device according to the first aspect of the invention, further comprises means for displaying in movement plural pieces of image data corresponding to respective pieces of source data in predetermined areas. The moving display of Plural pieces of image data can be attained by ensuring the area in the frame or window in an upper portion on the disk top of the display device (display unit) of the user, and moving the image data visually, right and left within this area. More specifically, when the bitmap image as the image data is displayed on the display unit, it is feasible to actualize such a visual effect that the data runs as if on an electronic bulletin board by adding or subtracting an X-coordinate value of a display position.

The means for thus displaying the data in movement is provided, whereby the user is able to grasp an epitome of contents of plural items of data even while executing other data processes on the disk top.

According to a tenth aspect of the present invention, the object display device according to the ninth aspect of the invention, further comprises means for selecting a desired piece of image data from the image data displayed in movement, and means for displaying the selected image data in an area excluding the display area.

When the user detects a target item of data while browsing the image data displayed in movement, the image data concerned is chosen by use of the means for selecting the image data, e.g., a coordinate indication device such as a mouse, etc. and shifted to an area other than the display area of the image data. For attaining this, an interface method such as a drag-and-drop operation and so one may be used. The image data thus selected by the user can be displayed while being ever-situated on the disk top screen of the display device.

According to an eleventh aspect of the present invention, the object display device according to the tenth aspect of the invention, further comprises means for displaying the linked source data on the display means when the image data displayed is designated.

The image data displayed in the area other than the display area according to the tenth aspect of the invention, is selected by the selecting means, whereby the source data linked to this piece of image data is displayed.

Thus, the source data defined as detailed information is easily browsed from the image data ever-situated on the disk top.

A twelfth aspect of the present invention corresponds to the first aspect, a thirteenth aspect to the second aspect, a fourteenth aspect to the fifth aspect, a fifteenth aspect to the seventh aspect, a sixteenth aspect to the ninth aspect, a seventeenth aspect to the tenth aspect, and an eighteenth aspect to the eleventh aspect, respectively.

According to a nineteen aspect of the present invention, steps of a method according to the twelfth aspect of the invention are stored as a program on a readable-by-computer storage medium.

The storage medium herein may embrace all types of mediums having optical, magnetic and magneto-optic recording means, and includes an optical disk, a magneto-optic disk and a magnetic tape, or a cartridge, a cassette, a card which accommodate these mediums.

According to a twentieth aspect of the present invention, the program according to the thirteenth aspect is stored on the medium according to the nineteenth, aspect of the invention.

According to a twenty first aspect of the invention, the object display device according to the first aspect of the invention, further comprises means for setting an effective period as attribute information with respect to the source data, the source data with an elapse over the effective period is not converted into the image data.

That is to say, the effective period is set with respect to the image data displayed on the display means, and only the latest information within a fixed period can be always browsed without an overflow of information on the screen even when new pieces of information such as news are daily added.

According to a twenty second aspect of the invention, the object display device according to the second aspect of the invention, the previous image data is not displayed when the source data is displayed on the display means upon the designation of the image data.

With this contrivance, the source data which has been once browsed is not displayed as the image data, and it is therefore feasible to prevent the once-browsed information from being clicked again indeliberately.

### Brief Description of the Drawings

FIG. 1 is a view showing an outline of a hardware system in an embodiment of the present invention;
FIG. 2 is an explanatory view showing a process of creating bitmap data for a dynamic display in the embodiment;
FIG. 3 is an explanatory view showing a process of creating bitmap data for a static display in the embodiment;
FIG. 4 is a view showing a standard template of a window used in the embodiment;
FIG. 5 is a view showing a modified template (1) of the window used in the embodiment;
FIG. 6 is a view showing a modified template (2) of the window used in the embodiment;
FIG. 7 is a view showing a modified template (3) of the window used in the embodiment;
FIG. 8 is a view showing the process of creating the bitmap data for the static display on a disk top screen in the embodiment;
FIG. 9 is a view showing a modified template (4) of the window used in the embodiment; and
FIG. 10 is an explanatory view showing a geometry of layout on the disk top screen in the embodiment.

### Best Mode for Carrying out the Invention

An embodiment of the present invention will hereinafter be described with reference to the drawings.

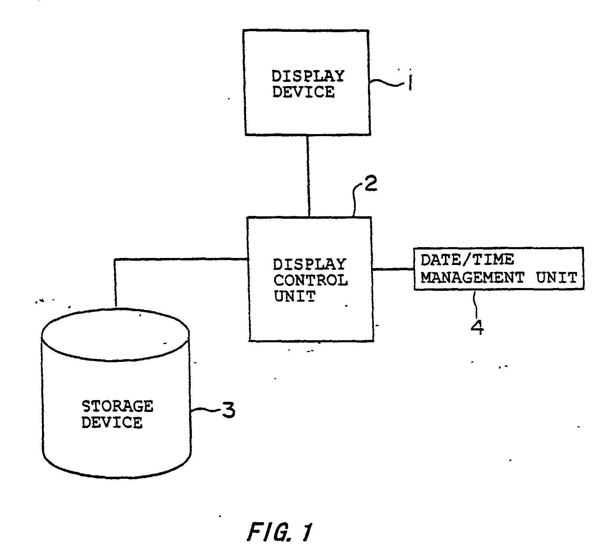

FIG. 1 shows an outline of a hardware architecture of a system for actualizing the present embodiment. The present embodiment can be actualized by, specifically, an office computer of a personal computer and an application program operating on an operation system.

In FIG. 1, a display device designated by the number 1 may involve the use of a display unit of the personal computer. A display control unit 2 has a function of controlling display on the display device 1, and corresponds to a display control processor, a CPU, etc. in the personal computer. A storage device 3 implies a large-capacity storage medium such as a hard disk device, etc., and is-stored with text data, still picture data, motion picture data, voice data and so on.

A date/time management unit 4 is a so-called timer, and what the date/time management unit 4 corresponds to is a timer for managing a date and a time when a file is created and updated in the personal computer.

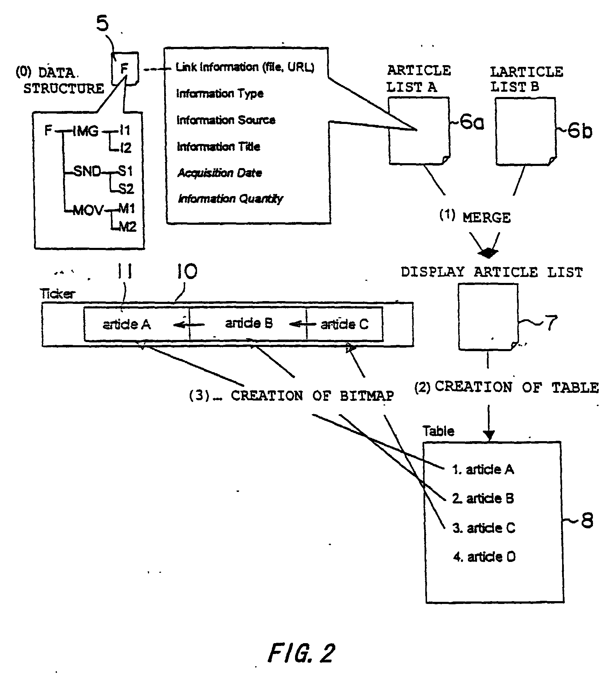

FIG. 2 shows a flow of processes in which a display article table 8 is created from a data file 5 stored in the storage device 3, and a bitmap data 11 for dynamic display is created.

The data file 5 in the storage device 3 is stored per folder with pieces of news article information collected on the Internet in a tree structure. For example, source data as the substantial of the article is stored as text data in an HTML format such as [news1.htm1], and image data such as [new1.gif], [news1.jpg] etc. displayed simultaneously with the text data is stored as image data in a folder named [IMG]. Further, voice information such as [nes1.wav] and so on is hierarchically stored in a folder named [SND], and motion picture data such as [news1.mov], etc. is likewise stored in a folder named [MOV].

A links to each file is described by use of a tag in the HTML file defined as the source data, whereby tat item of data can be browsed as multimedia data through a browser program.

In accordance with this embodiment, the data file 5 stored in such format has, together with link information described in the source data (the HTML file), information types (news, sports, etc.), information sources (such as specific newspaper publishing companies, etc.), information titles (characters subsequent to a title tag described in the source), acquisition year/month/date, and information quantities as pieces of attribute information. Among those items of information, the acquisition year/month/date and the information quantity may be shared with attribute information of the file managed by the operating system.

According to the present embodiment, the display control unit 2 creates an article list 6a from the data file 5 (the HTML file). This article list 6a is created by combining a character string defined as a title tag of the HTML with an epitome of the concerned article described in the data file 5 (the HTML file). Further, this article list 6a is structured of the character information.

Next, an article list 6a is created from another data file and merged with the previously created article list 6a, thereby creating a single display article list 7. This article list 7 is stored as a display article table 8 in the HTML format in the storage device 3.

Subsequently, the display control unit 2 creates bitmap data 11 for dynamic display from the display article table 8. This item of dynamic display oriented bitmap data 11 is created as rectangular bitmap data by extracting a representative character string, e.g., a character string corresponding to a headline when the concerned data item is an article on the newspaper from the data items stored in the display article table 8, and converting this extracted character string into a bitmap. At this time, the rectangular image data is prepared beforehand as a bitmap in the storage device 3, and the character string is bitmapped and thus laid out on the rectangular image, thereby creating the dynamic display oriented bitmap data 11. In this case, the rectangular image may be colored in black, while the character string may be colored in white or yellow.

The dynamic display oriented bitmap data 11 is used for display while moving from left to right within a frame 10 displayed on the display device 1 as in the case of an electronic bulletin board. That is, in the embodiment, the dynamic display oriented bitmap data 11 is moved in sequence within the frame 10 disposed on a disk top screen of the display device 1 under the control of the display control unit 2, thereby obtaining a visual effect as if on the electronic bulletin board. To be more specific, the dynamic display oriented bitmap data 11 is sequentially rewritten by predetermined bits in a -X axis direction within the frame 10, thereby obtaining the visual effect as if the dynamic display oriented bitmap data 11 moves from right to left.

Note that the display control unit 2 displays in movement the dynamic display oriented bitmap data 11 within the frame 10 at an interval of a predetermined time. After the dynamic display oriented bitmap data 11 has been displayed in movement within the frame 10, the display control unit 2 displays in movement the same dynamic display oriented bitmap data 11 after a predetermined time has elapsed.

Note that there may be provided an effective period of the dynamic display oriented bitmap data 11 displayed in movement within the frame 10. Such an effective period is managed by the date/time management unit 4. Then, the effective period may be set by a user, and the user is made to display an unillustrated set screen and to input the effective period. Herein, the effective period is what can be set in number of days, number of weeks, number of months, etc., and in this embodiment this period be, it is assumed, set to one day. The number of days elapsed is obtained from the acquisition year/month/date and present date information retained as attribute information in each article list, and it is judged whether or not that number of days exceeds the set effective period. Then, the above-described creating process of the dynamic display oriented bitmap data 11 is executed by use of the article list falling within only the effective period. With this process, only contents of the articles within the period desired by the user and a content of the latest article, are displayed in the frame 10, and hence the contents of the articles unnecessary to the user are not displayed with a less number of article contents displayed in movement within the frame 10. It is therefore easier for the user to grasp and select the contents of the respective articles.

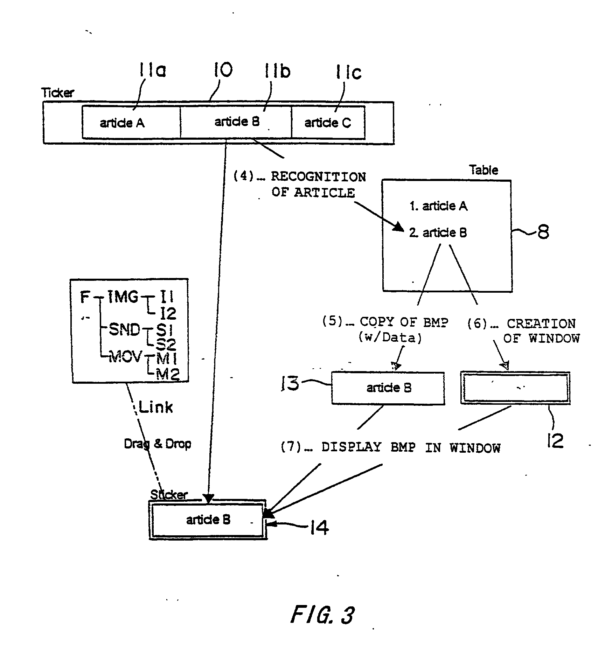

Next, a process in which static display oriented bitmap data 14 is created from the dynamic display oriented bitmap data 11 thus displayed, will be explained referring to FIG. 3.

That is, among pieces of dynamic display oriented bitmap data 11a 11b, 11c displayed in movement within the frame 10, the specified dynamic display oriented bitmap data 11b is dragged (designated) by a mouse and dropped (the dropping implies a state where a designated position as kept in the designated state is shifted, and this designation is cancelled in a specified position on the screen) onto the disk top screen, at which time the static display oriented bitmap data 14 corresponding to the dynamic display oriented bitmap data 11b is created in that drop position.

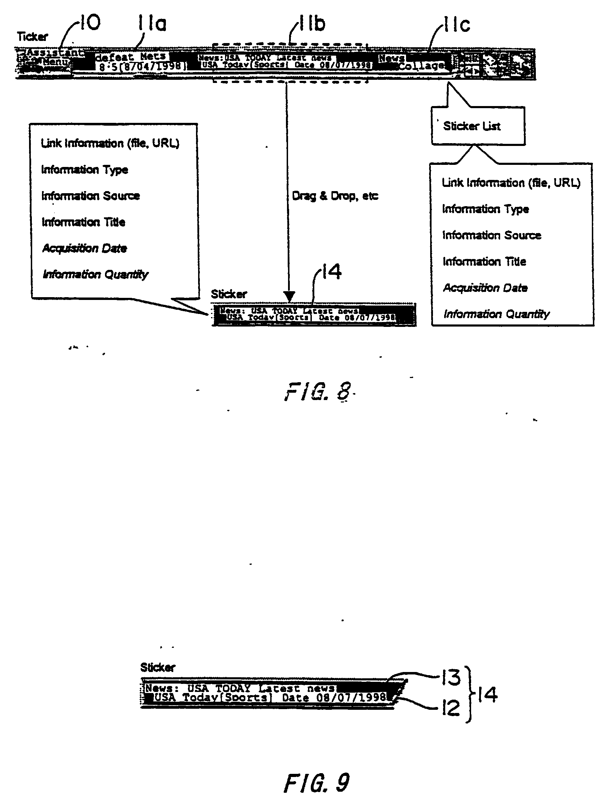

FIG. 8 specifically shows how the static display oriented bitmap data 14 is created from the dynamic display oriented bitmap data 11b on the disk top screen.

In this case, the display control unit 2, to begin with, detects designated position coordinates of the mouse dragged, and recognizes that this designated position exists in a pixel region of the dynamic display oriented bitmap data 11b. then, the display control unit 2 accesses the article items of the display article table 8 linked to the dynamic display oriented bitmap data 11b. Subsequently, the representative character string, i.e., the character string corresponding to the headline when the data item concerned is the article on the newspaper, is extracted from the accessed article items. The extracted character string is converted into the bitmap, thereby creating the rectangular static display oriented bitmap data 14. At this time, the static display oriented bitmap data 14 is created in the same procedure as when creating the dynamic display oriented bitmap data 1. Specifically, the rectangular image data is prepared beforehand as a bitmap in the storage device 3, and the character string is bitmapped and thus laid out on the rectangular image, thereby creating the static display oriented bitmap data 14.

Note that the static display oriented bitmap data 14 may also be created by copying the already-created dynamic display oriented bitmap data 11 instead of creating the data 14, as discussed above, in the same procedure as the dynamic display oriented bitmap data 11.

The static display oriented bitmap data 14 is structured of a display data element 13 and a window 12 arranged along its periphery. Herein, the window 12 is stored as bitmap data in the storage device 3, however, there are prepared the windows 12 taking a plurality of configurations as templates.

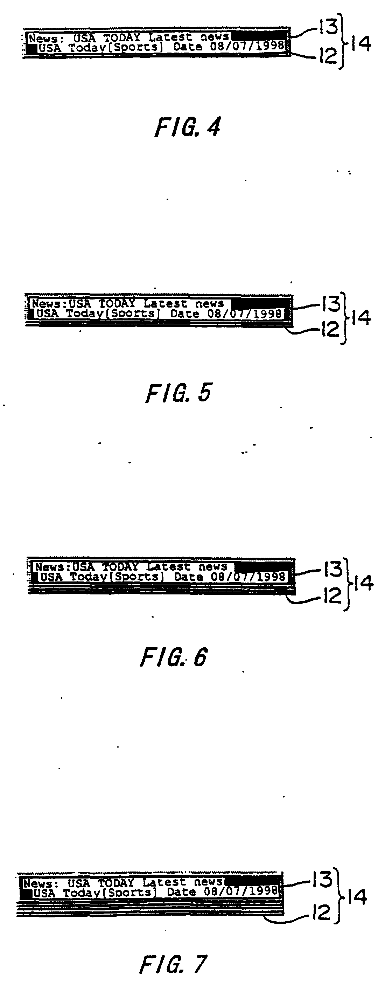

This window 12, which is to be used, differs corresponding to an attribute of the article item in the display article table 8 to which the static display oriented bitmap data 14 to be displayed is linked. For instance, if the number of files (the HTML file, a GIF file, etc.) linked to the static display oriented bitmap data 14 is less than 5, the frame takes such a configuration that, as shown in FIG. 4, the frame ahs the same thickness with respect to left and right sides, and upper and lower sides. If the number of files linked to the static display oriented bitmap data 14 is over than 5 but is not more than 9, there is used such a template that the lower side of the frame is twice as thick as other sides. Hereinafter, there are used likewise the templates in which the thickness of the lower side increases three time (see FIG. 6), four times and five times (see FIG. 7), each time the number of files linked to exceeds 5.

With the contrivance that there are thus prepared the templates in which the thickness of the lower side varies corresponding to the number of files, the user may be given an intuition to know an estimation of the number of files linked to the static display oriented bitmap data 14 by browsing the static display oriented bitmap data 14 displayed on the disk top screen on the display device 1.

The above-described variation of the lower side of the frame 10 may, other than the case of depending on the number of files linked to, depend upon a total capacity of the files linked to. For example, if the total capacity of the files linked to is 500 Kbytes or smaller, there maybe used the template in which, as shown in FIG. 4, the right and left sides, and the upper and lower sides all have the same thickness. If over 50 Kbytes but less than 1 Mbytes, there may be used the template in which the thickness of the lower side of the frame 10 is twice those of other sides.

Further, if the total capacity of files is over 1 Mbytes but less than 1.5 Mbytes, there is used the template in which the lower side of the frame 10 has a 3-fold thickness as large as those of other sides (FIG. 6).

On the other hand, in addition to the templates in which the thickness of the lower side of the frame 10 is made variable, there may be prepared the template assuming such a configuration that the right side is half rolled up. This configuration manifests a design of what a side end of tack paper adhered to a wall surface in a real-office is, with its adhesion having been decreased with an elapse of time, half rolled up.

For instance, when the static display oriented bitmap data 14 is laid out on the disk top screen by a drag-and-drop initially from the frame 10, what seems standard as shown in FIG. 4 is adopted as the window 12. If a period over seven days has elapsed under the management of the date/time management unit 4 since it was acquired, however, the window 12 is changed to take a configuration as illustrated in FIG. 9. This enables the user to conceptually grasp a state of time elapse since the date and time when the source data concerned was acquired, whereby the user might be prompted to access the source data quickly.

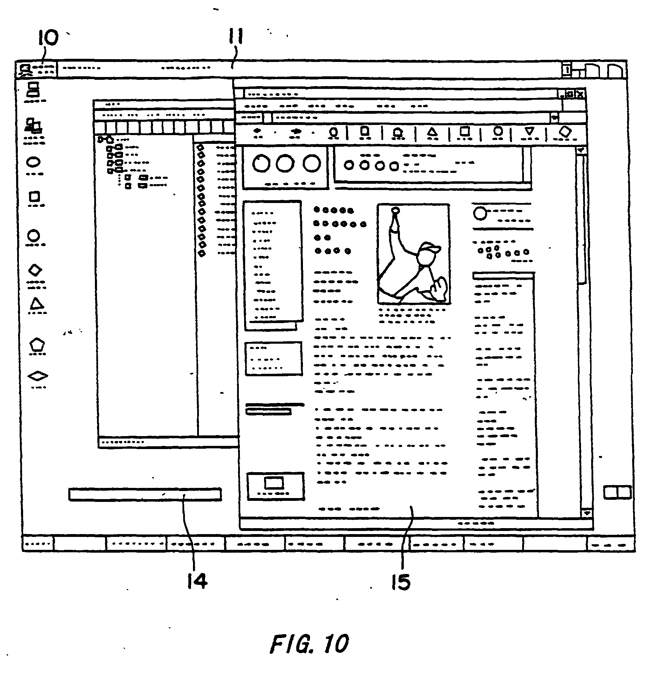

FIG. 10 shows an example of a geometry of layout on the disk top screen of the display device 1. As shown in FIG. 10, the fame 10 is disposed at an upper portion on the screen, and the dynamic display oriented bitmap data 11 is sequentially displayed in movement. Further, the static display oriented bitmap data 14 crated by dragging and dropping any one of the dynamic display oriented bitmap data sets 14, is displayed in a left lower region on the screen. Then, when this item of static display oriented bitmap data 14 is clicked by the mouse, the data file 5 (the HTML file) linked to the static display oriented bitmap data 14 concerned is opened by the browser program. Referring to FIG. 10, an area indicated by 15 is a browser-based display screen, and this screen is displayed according to a description of the data file 5.

Note that the display control unit 2, when detecting that the source data (the data file 5) linked to is displayed by designating (clicking) the static display oriented bitmap data 14, creates the display article list 7 excluding the article list of the relevant static display oriented bitmap data 14, and may create the dynamic display oriented bitmap data 11 based on this updated display article list 7. The article browsed as the source data (the data file 5) is not displayed any more as the dynamic display oriented bitmap data 1 in the frame 10 on the display, thereby making it feasible to avoid repetitive browsing of the article concerned.

As discussed above, according to the present embodiment, the representative character string, e.g., the headline of the article on the newspaper, is bitmapped from the character strings of the data file 5 and displayed as the dynamic display oriented bitmap data 11, thereby facilitating a comprehension of the user by browsing.

Furthermore, with respect to the article about which the user is concerned, the static display oriented bitmap data 14 linked to the source data is created from the dynamic display oriented bitmap data 11 and laid out on the disk top screen, whereby the content of the source data concerned can be easily confirmed.

Note that the user's operation for creating the static display oriented bitmap data may not necessarily be the drag-and-drop operation as explained in the present embodiment. Namely, the mouse-used double-clicking on the dynamic display oriented bitmap data and an operation of an unillustrated dedicated button, may be used as a trigger for creating the static display oriented bitmap data. The drag-and-drop operation explained in this embodiment is, however, most suited to a sense of action of stocking a desired item of information on the disk top.

Further, the image data has been described so far as the bitmap data and may take, as a matter of course, formats other than what has been given above.

According to the present embodiment, the link information to the detailed information required by the user can be stocked in such a format that the epitome thereof is understandable, and, besides, the thus stocked link information is selectively clicked, whereby the detailed information linked to can be browsed.

Accordingly, the information desired by the user can be stocked out of the information of which the display content is sequentially changed. Moreover, the detailed information corresponding to the information stocked can be browsed immediately when the user needs, and it is possible to reduce an operational load upon the user.

### Industrial Applicability

The present invention is applicable to the display of a result of the retrieval on the Internet.

## Claims

1. An object display device comprising:
a converter means for converting a representative character string of source data containing character strings into image data defined as an object;
a storage means for storing the source data and the image in a manner of relating these pieces of data to each other; and
a display means for displaying the image data on display means.

2. An object display device according to claim 1, further comprising the display means for displaying the source data linked to when the image data displayed is designated.

3. An object display device according to claim 1, wherein the image data is structured such that the character string is converted into a bitmap and thus laid out on an background image.

4. An object display device according to claim 3, wherein the image data has a window, provided along a periphery of the background image, for showing an attribute of the source data to which the image data is linked.

5. An object display device according to claim 4, wherein said display means displays the image data together with the window, of which a frame size differs corresponding to a capacity of the source data to which the image data is linked.

6. An object display device according to claim 4, further comprising template images of plural types of windows, of which frame sizes are different,
wherein said template corresponding to a capacity of the source data is used.

7. An object display device according to claim 4, wherein said display means displays the image data together with the window of which a frame configuration differs corresponding to the number of hours or days since the time when the source data to which the image data is linked was acquired.

8. An object display device according to claim 4, further comprising template images of plural types of windows; of which frame configurations are different,
wherein said template corresponding to the number of hours or days since the time when the source data was acquired.

9. An object display device according to claim 1, further comprising the display means for displaying in movement plural pieces of image data corresponding to respective pieces of source data in predetermined areas.

10. An object display device according to claim 9, further comprising:
a selector means for selecting a desired piece of image data from the image data displayed in movement; and
the display means for displaying the selected image data in an area excluding the display area.

11. An object display device according to claim 10, wherein the source data linked to is displayed on said display means when the image data displayed is designated.

12. An object display method comprising:
a step of converting a representative character string of source data containing character strings into image data defined as an object;
a step of storing the source data, and the image in a manner of relating these pieces of data to each other; and
a step of displaying the image data on display means.

13. An object display method according to claim 12, further comprising a step of displaying on said display means the source data linked to when the image data displayed is designated by designating means on the screen.

14. An object display method according to claim 13, further comprising a step of making said display means display the image data together with the window, of which a frame size differs corresponding to a capacity of the source data to which the image data is linked.

15. An object display method according to claim 13, further comprising a step of making said display means display the image data together with the window of which a frame configuration differs corresponding to the number of hours or days since the time when the source data to which the image data is linked was acquired.

16. An object display method according to claim 12, further comprising a step of displaying in movement plural pieces of image data corresponding to respective pieces of source data in predetermined areas.

17. An object display method according to claim 12, further comprising;
a step of selecting a desired piece of image data from the image data displayed in movement; and
a step of displaying the selected image data in an area excluding the display area.

18. An object display method according to claim 17, further comprising a step of displaying the source data linked to on said display means when the image data displayed is designated.

19. A readable-by-computer recording medium stored with a program, for execution, comprising:
a step of converting a representative character string of source data containing character strings into image data defined as an object;
a step of storing the source data and the image in a manner of relating these pieces of data to each other; and
a step of displaying the image data on display means.

20. A readable-by-computer recording medium stored with a program according to claim 19, further comprising a step of displaying on said display means the source data linked to when the image data displayed is designated by designating means on the screen.

21. An object display device according to claim 1, further comprising a set means for setting an effective period as attribute information with respect to the source data,
wherein said converter means for conversion into the image data does not convert the source data with an elapse over the effective period into the image data.

22. An object display device according to claim 2, wherein the previous image data is not displayed when the source data is displayed on said display means upon the designation of the image data.

23. An object display device comprising:
a display means for displaying plural pieces of information in a manner of sequentially changing a display content;
a detect means for detecting a predetermined user's operation for the information displayed; and
a record means for recording the information operated in accordance with the detection of the users' operation.

24. An object display device according to claim 23, wherein the plural pieces of information are displayed in movement in predetermined display areas.

25. An object display device according to claim 23, wherein the information is displayed in a predetermined display format on said display means as the record of the information.

26. An object display device according to claim 23, wherein the operation is a drag-and-drop operation aiming at a desired piece of information.

27. An object display device according to claim 23, further comprising:
the detect means for detecting a selection indicating operation with respect to the information recorded; and
the display means for displaying linked information corresponding to the information subjected to the selection indication operation.

28. An object display device according to claim 27, wherein the linked information is source data, and
said object display device further comprises means for creating the information displayed by an extraction from the source data.

29. An object display device according to claim 28, wherein the source data belongs to a remote terminal connected via a network.

30. An object display method comprising:
a step of displaying plural pieces of information in a manner of sequentially changing a display content;
a step of detecting a predetermined user's operation for the information displayed; and
a step of recording the information operated in accordance with the detection of the users' operation.

31. An object display method according to claim 30, wherein said step of displaying the plural pieces of information includes a step of displaying the information in movement in predetermined display areas.

32. An object display method according to claim 30, wherein said step of recording the information includes a step of displaying the information in a predetermined display format on said display means.

33. An object display method according to claim 30, wherein the operation is a drag-and-drop operation aiming at a desired piece of information.

34. An object display method according to claim 30, further comprising:
a step of detecting a selection indicating operation with respect to the information recorded; and
a step of displaying linked information corresponding to the information subjected to the selection indication operation.

35. An object display method according to claim 34, wherein the linked-information is-source data, and
said object display method further comprises a step of creating the information displayed by an extraction from the source data.

36. An object display method according to claim 35, wherein the source data belongs to a remote terminal connected via a network.

37. A readable-by-computer recording medium recorded with a program, to be executed by a computer, comprising:
a step of displaying plural pieces of information in a manner of sequentially changing a display content;
a step of detecting a predetermined user' s operation for the information displayed; and
a step of recording the information operated in accordance with the detection of the users' operation.

38. A readable-by-computer recording medium recorded with a program according to claim 37, wherein said step of displaying the plural pieces of information includes a step of displaying the information in movement in predetermined display areas.

39. A readable-by-computer recording medium recorded with a program according to claim 37, wherein said step of recording the information includes a step of displaying the information in a predetermined display format on said display means.

40. A readable-by-computer recording medium recorded with a program according to claim 37, wherein the operation is a drag-and-drop operation aiming at a desired piece of information.

41. A readable-by-computer recording medium recorded with a program according to claim 37, further comprising:
a step of detecting a selection indicating operation with respect to the information recorded; and
a step of displaying linked information corresponding to the information subjected to the selection indication operation.

42. A readable-by-computer recording medium recorded with a program according to claim 41, wherein the linked information is source data, and
said program further comprises a step of creating the information displayed by an extraction from the source data.

43. A readable-by-computer recording medium recorded with a program according to claim 42, wherein the source data belongs to a remote terminal connected via a network.
